# EUROPEAN PATENT SPECIFICATION

(11) **EP 4 177 141 B1**
(45) Date of publication and mention of the grant of the patent: **30.07.2025**
(21) Application number: 22204476.0
(22) Date of filing: 28.10.2022
(51) Int. Cl.: B62J 45/413, B62J 45/422, B62K 23/04, A63F 13/245

(54) **IMPROVED ELECTRONIC THROTTLE CONTROL DEVICE FOR A MOTORCYCLE, SNOWMOBILE OR A SIMILAR VEHICLE SUITABLE TO OFFER THE RIDER SENSATIONS OF A MECHANICAL THROTTLE CONTROL**
ELEKTRONISCHE DROSSELKLAPPENSTEUERVORRICHTUNG FÜR EIN MOTORRAD, SCHNEEMOBIL ODER ÄHNLICHES FAHRZEUG, GEEIGNET ZUM ANBIETEN DER FAHREREMPFINDUNGEN EINER MECHANISCHEN DROSSELKLAPPENSTEUERUNG
DISPOSITIF ÉLECTRONIQUE AMÉLIORÉ DE COMMANDE DE PAPILLON POUR MOTOCYCLETTE, MOTONEIGE OU VÉHICULE SIMILAIRE APTE À OFFRIR LES SENSATIONS DU CONDUCTEUR D'UNE COMMANDE MÉCANIQUE DE PAPILLON

(30) Priority: 04.11.2021 IT 202100028127
(43) Date of publication of application: 10.05.2023
(73) Proprietor: Domino S.r.l., 23896 Sirtori (LC) (IT)
(72) Inventor: LAMPARELLI, Luca, 20841 Carate Brianza (MB) (IT); LEVATI, Davide, 23885 Calco (LC) (IT)
(74) Representative: Ripamonti, Enrico

(56) References cited:
- EP-A1- 2 263 933
- EP-B1- 2 049 385
- WO-A1-2015/111535
- DE-A9- 102008 051 609
- US-A1- 2013 255 432

## Description

Forming an object of the present invention is an electronic throttle control device for two-or three-wheeled motorcycles, four-wheeled motorcycles, snowmobiles or similar vehicles according to the preamble of the main claim.

Throttle control devices comprising a rotary grip associated with a handlebar of the vehicle of the type mentioned above have long been known. The rotation of the grip allows to change the number of revolutions of the engine of the vehicle ("throttle control") as a function of the needs and the use thereof.

An electronic throttle control device uses electric/electronic members functionally associated with the grip arranged on the handlebar which detects the rotation thereof and which controls the change in the number of revolutions of the engine of the vehicle as a function of said rotation. For example, such electric/electronic members comprise a first component integrally joined with the grip, usually defined by a rotor and a second component defined by a position or angular sensor, for example a Hall effect sensor, integrally joined with the handlebar or with a part proximal to the grip fixed thereto. The rotation of the grip entails the resulting rotation of the rotor, an event detected by the sensor and which, through a connection of the sensor to a control unit of the vehicle, results in the latter changing - in a per se known manner - the number of revolutions of the engine (for example by acting on a throttle-equipped body or a throttle valve).

Although such known devices operate satisfactorily, they do not offer riders the same sensations as the mechanical throttle control devices when the rider actuates the throttle control, that is rotates the grip for example to accelerate. Such sensation derives from a known radial clearance between the grip and the handlebar present in said mechanical devices, to which there corresponds the load of a spring of the throttle-equipped body or of the carburettor (defining the element for controlling the number of revolutions of the engine), and the friction of the first release friction and the sliding of the flexible mechanical drive system associated with the grip.

Such sensations cannot be detected when using the electronic throttle control where the coupling tolerances between the various components are very limited so as to avoid an incorrect control of the engine.

EP2263933A1 describes a throttle control device used for controlling an engine of a vehicle based on the detection of a rotation angle of a rotary grip of the throttle rotatably mounted on a front end of a handlebar (h) of a vehicle. In the grip there is arranged a magnet which is rotatable integrally joined with the grip and an angular detector for detecting the changes of a magnetic field of the magnet in a non-contact fashion so as to detect the rotation angle of the grip. In the latter there is present a friction device for generating a resistant force during the rotation of the grip, said resistant force being variable. EP 2 263 933 A1 is considered the closest prior art and discloses all of the features of the preamble of claim 1.

In the grip there are present a first and a second spring, the first spring controlling the rotation of the grip so as to oppose it. The second spring is part of the friction device and it contributes to changing the resistant force of the latter, without acting on the rotation of the grip when it is used to change the number of revolutions of the engine of the vehicle.

An object of the present invention is to provide an electronic throttle control device for motorcycles, motorbikes, snowmobiles, personal watercrafts or similar vehicles, that is improved with respect to known electronic controls already available in the market.

In particular, an object of the present invention is to provide a throttle control device of the type mentioned above that offers the rider of the vehicle sensations substantially equivalent to those detected using a similar mechanical control device.

Another object of the present invention is to provide an electronic throttle control device that is quick to assemble and that is still cost-effective.

A further object of the present invention is to provide an electronic throttle control device which still offers high safety to the rider during use.

These and other objects which shall be more apparent to the person skilled in the art are attained by an electronic throttle control device according to the independent claim.

For a better understanding of the present invention, the following drawings are attached hereto, purely by way of non-limiting example, wherein:
figure 1 represents a lateral exploded perspective view of a first embodiment of a throttle control device made according to the invention;
figure 2 represents an exploded perspective view - from another angle - of the control device of figure 1;
figure 3 represents a perspective view of a detail of the control device of figure 1;
figure 4 represents a lateral exploded perspective view of a variant of the control device of figure 1;
figure 5 represents a lateral exploded perspective view of a part of the control device of figure 4; and
figure 6 shows a front view of a part of the control device of figure 4.

With reference to the aforementioned figures, they show two embodiments of a control device according to the invention. In all the figures, identical or corresponding parts are indicated using the same reference numerals.

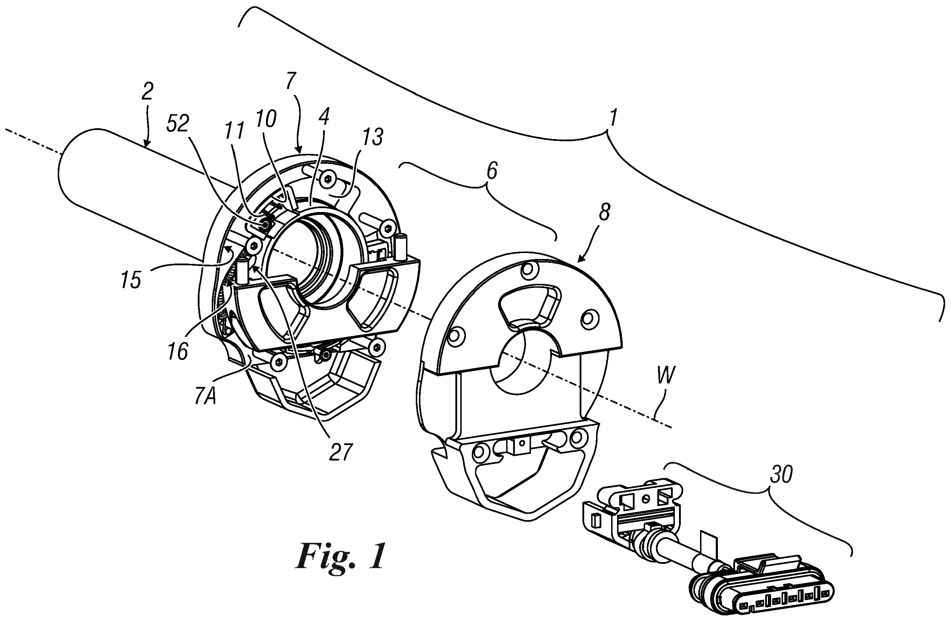

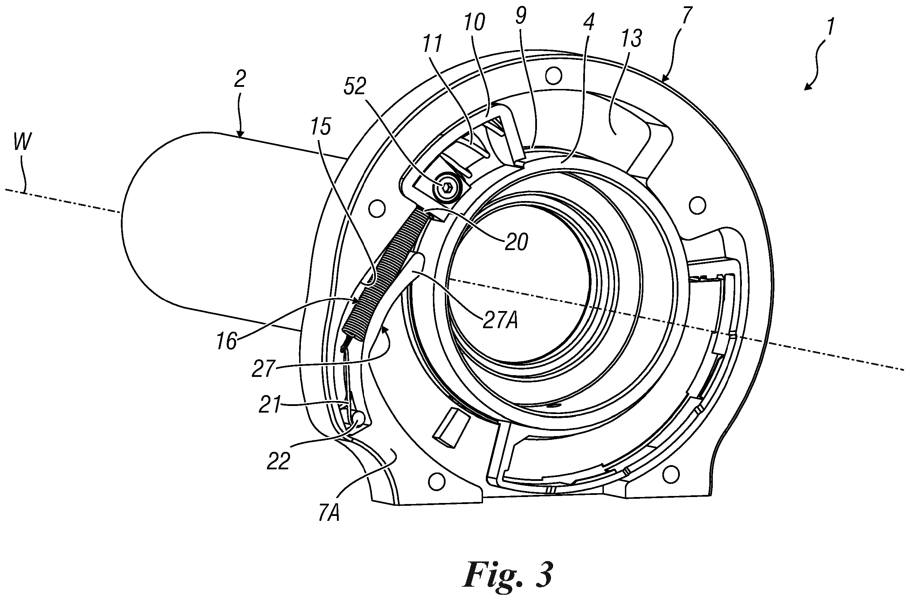

Addressing figures 1-3, they show, in the main components thereof, a control device 1 comprising a grip 2 adapted to be inserted into a handlebar (not shown) of a vehicle such as a four-wheeled motorcycle, a two or three-wheeled motorcycle, a snowmobile or a personal watercraft. In all these vehicles, the grip 2 is suitable to rotate around a longitudinal axis W thereof on the handlebar so as to allow to control throttle of the vehicle that is change the number of revolutions of the engine of the latter.

The grip 2 comprises an end 4 inserted into a box-like body 6 fixed to the handlebar and having two components 7 and 8 suitable to be enclosed into each other and which can be fixed to each other. More particularly, the end 4 of the grip 2 is inserted into a hole 9 of the component 7 of the box-like body 6 and it supports a chamber 10 into which there is inserted a common elastic element (compression spring) 11 whose function will be described below.

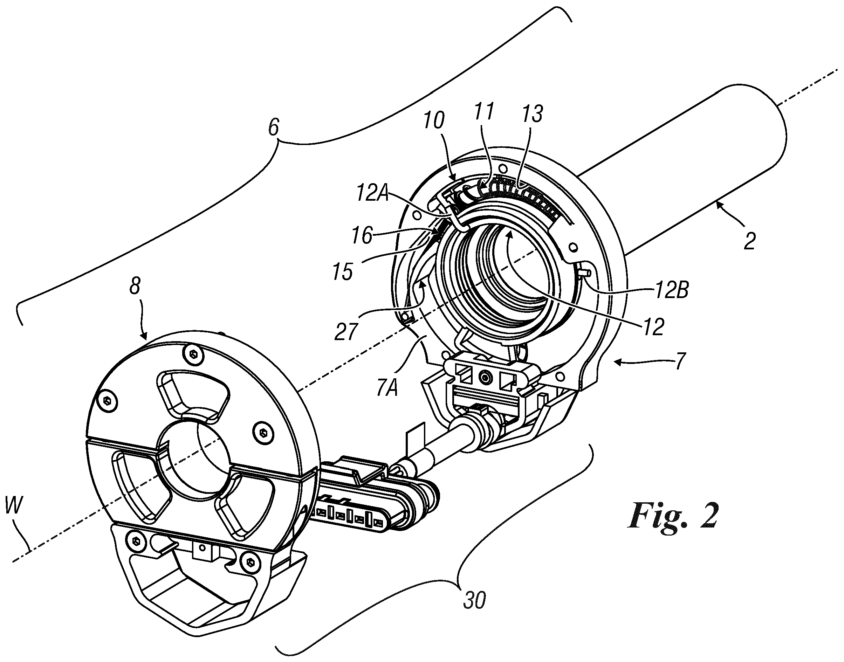

In the body 6 there is present a first torsion spring 12 (per se known), shown only in Figure 2, which has its mounting interface between the grip 2, through the hole 9 and a special seat of the body 8 (not shown) so that - when assembled - it generates an established preload torque and suitable to define - upon the compression thereof - the effective arc of rotation (that is which generates the acceleration of the vehicle) of the grip and therefore the actual range of number of revolutions allowed to the engine of the vehicle (not shown).

The first torsion spring is fixed - at a first end 12A - to the chamber 10 and therefore to the grip and - at a second end 12B thereof - to the component mentioned above 7 being anchored to a pivot provided therein; such first spring 12 ensures feedback to the rider as regards the rotation obtained by the grip 2 and therefore the actual control of the throttle. The first spring 12 also and above all ensures a full return of the grip to the zero-acceleration position that is after the rider releases the control.

The chamber 10 protrudes radially from the end 4 of the grip and - upon rotating the latter around the axis W - it moves in a recess 13 of the component 7. Such recess is proximal to a seat 15 for a second traction spring 16 having a preload different from that of the (first) spring 12 and operating on the grip 2 before the action of the first spring 12. For example, the first spring has a preload comprised between 0.12 and 0.9 Nm, while the second spring 16 has an equivalent torsion preload applied to the pipe comprised between 0.01 and 0.1 Nm, that is such to generate a resistant torque on the grip 2 that is much lower than that of the first spring 12.

Such second spring 16 has a first end 20 integrally joined with the chamber 10 of the grip 2 through a pivot 52 and a second end 21 fixed to a pivot 22 of the component 7. It should be observed that the compression spring 11 has the function of ensuring that the mechanical stop element of the second traction spring 16 is held in position even in the presence of possible vibration loads coming from the vehicle.

Thanks to such second low preload spring 16, when the rider rotates the grip 1 to accelerate, starting from a zero angular position that is with the grip fully rotated to end-stroke, said grip moves as if such second spring does not exist, therefore creating a sensation of initial "clearance" of the grip like in the case of mechanical throttle controls. Obviously, to such first "arc of rotation" or clearance does not correspond to any throttle control that is the engine of the vehicle does not increase the number of revolutions thereof, a control obtained by rotating the grip 2 counteracting against the first spring 12 which therefore acts "in a cascade fashion" that is subsequently to the action of the second spring 16.

The rider therefore detects the clearance of the grip, but actually the latter, starting from the end-stroke position, rotates around the axis W counteracting against the second spring 16 which is also capable of counteracting the vibrations of the vehicle (generated by the running engine). Furthermore, the rider knows that he/she has to overcome the aforementioned clearance in order to accelerate and takes this into account when starting off, for example, the motorcycle in a race.

It should be observed that the initial rotation of the grip 2, related to the presence of the second spring 16, occurs for a very limited arc (for example smaller than 10°, preferably from 0° to 4°), while the subsequent remaining rotation (which leads to the actual acceleration of the vehicle) occurs on a more significant arc, for example between 50° and 75°, counteracting the stiffness of the main compression spring 12 or first spring 12 (as it occurs in electronic controls, or Ride-By-Wire or RBW, standard) which acts on the grip 2 subsequently and immediately after the action of the second spring 16.

Once the acceleration has terminated, the first spring 12 brings the grip to the position in which there is no increase in the number of revolutions of the engine and the second spring 16 returns the grip to the end-stroke (rotation angle equal to 0°).

The invention also allows that a second characteristic generated by a mechanical control, be "felt" by the rider using the control device of the invention. Such characteristic is the first release and sliding friction of the flexible mechanical drive system (sheathed wire) which connects the grip to the throttle valve in mechanical throttle controls.

The aforementioned characteristic is "mimicked" by a rubbing of the second spring 16 against the curved shoulder 27 present in the box-like body 6: in the embodiment of figures 1-3, such shoulder 27 is integrally joined to the component 7 and it defines - therewith - the seat 15 for the second spring 16. Thereon, there "extends" the second spring 16 when the rotation of the grip 2 starts and such second spring rubs thereon, with friction which is "felt" by the rider, when the grip 2 is rotated within the angular range in which it causes an increase in the revolutions of the engine (that is the acceleration thereof).

It should be observed that such shoulder 27 protrudes from a portion 7A of the first component 7 and it comprises a vacant end 27A folded towards the first component 7 that is towards the end 4 of the grip 2, that is the aforementioned shoulder 27 is not concentric to the hole 9 in which such end 4 is inserted, but "points" towards it. This allows the initial rotation of the grip 2 (starting from the end-stroke thereof) around the axis W without risks of breaking the second spring 16 due to an excessive pressure on the shoulder 27; however, at the same time there is generated a relative sliding between the second spring 16 and the aforementioned shoulder such to create a resistance against the rotation of the grip 2, a resistance which reminds of the sliding of the flexible mechanical drive system of the mechanical throttle control devices.

The aforementioned solutions allow the rider to have the sensation (usually positive since it offers greater confidence in riding the vehicle) of riding a motorcycle or the like using a mechanical throttle control device and is not affected by the "joystick effect" which are often offered by electric throttle control devices (RBW).

Figures 1-3 also show part of the components (associated with the body 6) suitable to allow the electric control (RBW) of the engine and that is the components indicated with 30, per se known and therefore not described. Such components comprise detection means (per se known and not described further) suitable to detect the rotation of the grip and - as a result - control the number of revolutions of the engine of the vehicle.

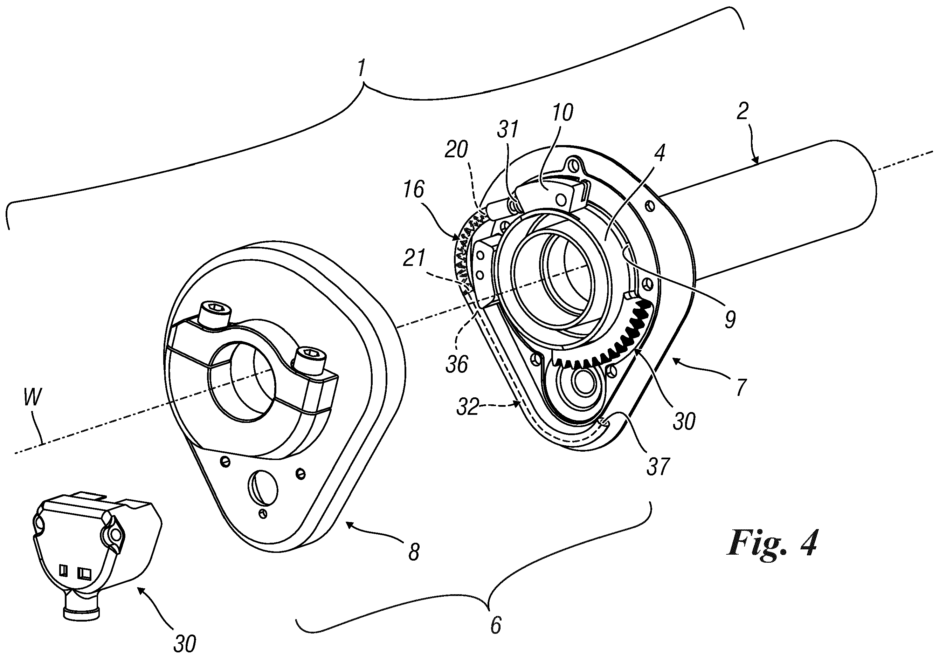

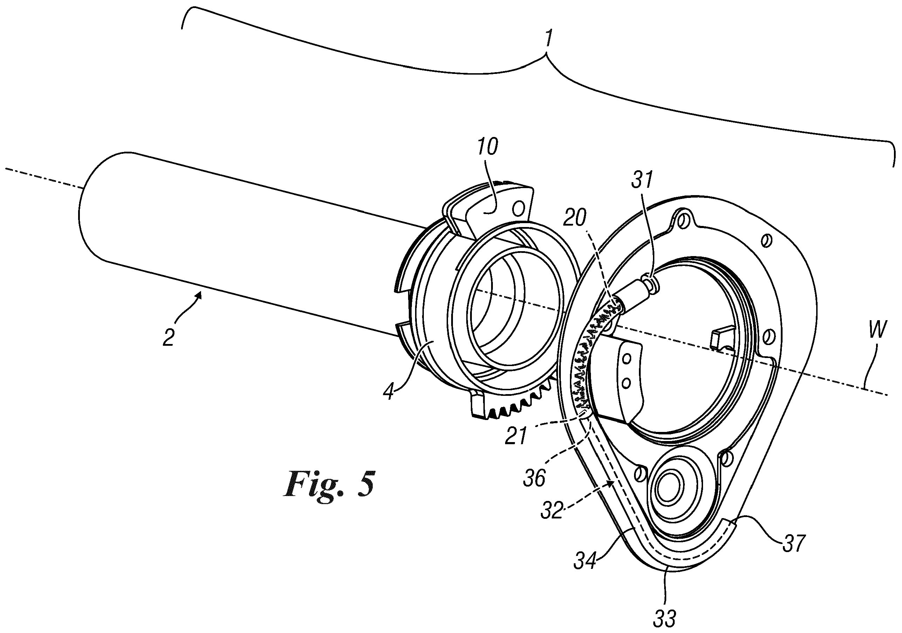

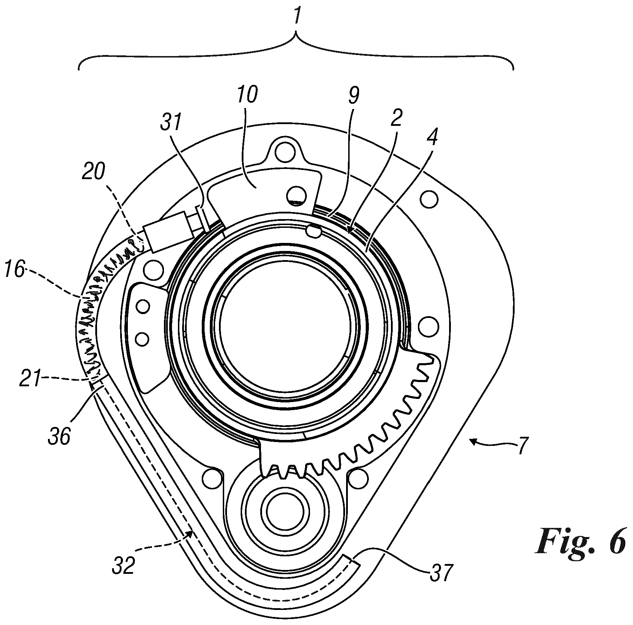

Figures 4-6 show a different embodiment of the invention. In this solution, the second spring 16 (associated through a first end 20 to a member 31 for constraining to the chamber 10 integrally joined with the grip) is connected - with a second end 21 thereof - to a metal wire 32 (dashed in the figures) arranged in a sheath 33, for example made of rubber, in turn arranged in a corresponding seat 34 of at least one of the components 7 and 8 of the body 6 (it is obtained in the first component 7 in the figures).

The metal wire 32 has a first end 36 fixed - at the second end 21 of the second spring - to a second end 37 fixed to the component 7.

The sheath 33 and the wire are arranged, curved, in the body 6 around the hole 9 of the component 7 of such body.

When the rider accelerates, after a first rotation (starting from the end-stroke) of the grip in which the second spring 16 is pulled creating the clearance (or "idle stroke") described above relating to figures 1-3, the grip actually causes - by rotating it - the acceleration of the engine. After the initial arc (for example between 0° and 4°), the rotation of the grip drives the wire 32 in the sheath 34 (due to the traction of the second spring 16 integrally joined with such wire) and this generates a friction of the wire in the sheath offering the rider the sensation that it can cause when riding a motorcycle using a mechanical throttle control device.

Therefore, even the solution of figures 4-6 allows to obtain an electric throttle control device 1 of the RBW type, which mimics a similar mechanical device.

Electrical components for the RBW throttle control are present also in Figures 4-6. Such components are known and will not be described further.

## Claims

1. Electronic throttle control device for a two or three-wheeled motorcycle, a four-wheeled motorcycle, a snowmobile or a personal watercraft, the vehicle having a handlebar on which there is mounted a grip (2) of said control device (1), under the action of a rider, the grip (2) being suitable to rotate around a longitudinal axis (W) thereof starting from an end-stroke position to change the motion condition of the vehicle, said rotation being detected by detection means (30) suitable to allow throttle control that is change the number of revolutions of an engine of the vehicle as a function of a rotation of the grip (2), the grip (2) being associated with a body (6) fixed to the handlebar and rotating with respect thereto, there being provided for a first spring (12) with preestablished preload which allows the rotation of the grip (2) on a predetermined arc of rotation corresponding to a range of possible number of rotations for the engine, wherein there is provided for a second spring (16) operating on the grip (2) at the start of the rotation thereof from the end-stroke around the longitudinal axis (W) in the same rotational direction, said second spring (16) having a preload lower than that of the first spring (12) and acting on the grip (2) before the range of said first spring (12) on the grip, such action of the second spring (16) generating the perception - in the rider - of an initial clearance in the rotation of the grip (2) and not causing any increase of the number of revolutions of the engine, said clearance corresponding to a clearance of a mechanical throttle control device, **characterised in that** first and second spring (12, 16) returning the grip (2) to the same end-stroke position at the end of the change of the motion condition of the vehicle.

2. Control device according to claim 1, **characterised in that** the second spring (16) allows an angular rotation of the grip (2) from the end-stroke position within 10°, preferably comprised between 0° and 4°.

3. Control device according to claim 2, **characterised in that** the second spring (16) is a traction spring having a first end (20) integrally joined with the grip (2) and a second end (21) functionally associated with the body (6) fixed to the handlebar.

4. Control device according to claim 3, **characterised in that** said second spring (16) is arranged in a seat (15) of the body (6) fixed to the handlebar, said seat (15) being defined by a first component (7) of such body and by a curved shoulder (27) present on said component, the second end (21) of such second spring (16) being fixed to said body (6) in such seat (15).

5. Control device according to claim 4, **characterised in that** said grip (2) has an end (4) inserted into a hole (9) of said first component (7) of the body (6) fixed to the handlebar, said end cooperating with the first end (20) of the second spring (16).

6. Control device according to claims 4 and 5, **characterised in that** said shoulder (27) protrudes from a portion (7A) of said first component (7) and it has a vacant end (27A) folded towards the hole (9) of such first component (7).

7. Control device according to claim 4, **characterised in that** the second spring (16) slides with friction on said curved shoulder (27) when the grip (2) is rotated to actually change the number of revolutions of the engine.

8. Control device according to claim 3, **characterised in that** said second spring (16) has the second end (21) fixed to a first end (36) of a metal wire (32) inserted into the body (6) fixed to the handlebar, a second end (37) of said metal wire (32) being fixed to such body (6).

9. Control device according to claim 8, **characterised in that** said metal wire (32) is inserted into a sheath (33) arranged in a corresponding seat (34) of said body (6) fixed to the handlebar, said wire (32) sliding with friction in said seat (34) when the grip (2) is rotated to actually change the number of revolutions of the engine.

10. Device according to claim 1, **characterised in that** said first spring (12) is a compression torsion spring having a preload comprised between 0.12 and 0.8 nM, the second spring (16) being a traction spring with a preload comprised between 0.1 and 1 N.

## Patentansprüche

1. Elektronische Gasbetätigungssteuervorrichtung für ein zwei- oder dreirädriges Kraftrad, ein vierrädriges Kraftrad, ein Schneemobil oder einen Jetski, wobei das Fahrzeug eine Lenkstange aufweist, an der ein Griff (2) der Steuervorrichtung (1) montiert ist, wobei der Griff (2) unter der Einwirkung eines Fahrers geeignet ist, um ausgehend von einer Endlage um seine Längsachse (W) zu drehen, um den Bewegungszustand des Fahrzeugs zu ändern, wobei diese Drehung durch Erfassungseinrichtungen (30) erfasst wird, die geeignet sind, um eine Gasbetätigungssteuerung zu ermöglichen, d. h. Ändern der Drehzahl eines Motors des Fahrzeug abhängig von einer Drehung des Griffs (2), wobei der Griff (2) mit einem Körper (6) assoziiert ist, der an der Lenkstange befestigt ist und in Bezug auf diese dreht, wobei eine erste Feder (12) mit einer voreingestellten Vorspannung bereitgestellt ist, die die Drehung des Griffs (2) um einen vorbestimmten Drehwinkel entsprechend einem Bereich möglicher Drehzahlen des Motors ermöglicht, wobei eine zweite Feder (16) bereitgestellt ist, die an dem Griff (2) zu Beginn seiner Drehung aus der Endstellung um die Längsachse (W) in derselben Drehrichtung wirkt, wobei die zweite Feder (16) eine niedrigere Vorspannung als jene der ersten Feder (12) aufweist und an dem Griff (2) vor dem Bereich der ersten Feder (12) auf den Griff wirkt, eine solche Wirkung der zweiten Feder (16), die bei dem Fahrer die Wahrnehmung eines anfänglichen Spiels bei der Drehung des Griffs (2) hervorruft und keine Erhöhung der Motordrehzahl bewirkt, wobei dieses Spiel dem Spiel einer mechanischen Gasbetätigungssteuervorrichtung entspricht, **dadurch gekennzeichnet, dass** die erste und die zweite Feder (12, 16) den Griff (2) am Ende der Änderung des Bewegungszustands des Fahrzeugs in die gleiche Endlage zurückstellen.

2. Steuervorrichtung nach Anspruch 1, **dadurch gekennzeichnet, dass** die zweite Feder (16) eine Winkeldrehung des Griffs (2) aus der Endlage innerhalb von 10°, vorzugsweise zwischen 0° und 4°, ermöglicht.

3. Steuervorrichtung nach Anspruch 2, **dadurch gekennzeichnet, dass** die zweite Feder (16) eine Zugfeder ist, die ein erstes Ende (20), das fest mit dem Griff (2) verbunden ist, und ein zweites Ende (21), das funktionell mit dem Körper (6) assoziiert ist, der an der Lenkstange befestigt ist, aufweist.

4. Steuervorrichtung nach Anspruch 3, **dadurch gekennzeichnet, dass** die zweite Feder (16) in einem Sitz (15) des Körpers (6) angeordnet ist, der an der Lenkstange befestigt ist, wobei der Sitz (15) durch eine erste Komponente (7) des Körpers und durch eine gekrümmte Schulter (27) an dieser Komponente definiert ist, wobei das zweite Ende (21) einer solchen zweiten Feder (16) an dem Körper (6) in einem solchen Sitz (15) befestigt ist.

5. Steuervorrichtung nach Anspruch 4, **dadurch gekennzeichnet, dass** der Griff (2) ein Ende (4) aufweist, das in ein Loch (9) der ersten Komponente (7) des an der Lenkstange befestigten Körpers (6) eingesetzt ist, wobei das Ende mit dem ersten Ende (20) der zweiten Feder (16) zusammenwirkt.

6. Steuervorrichtung nach den Ansprüchen 4 und 5, **dadurch gekennzeichnet, dass** die Schulter (27) aus einem Abschnitt (7A) der ersten Komponente (7) hervorsteht und ein freies Ende (27A) aufweist, das in Richtung des Lochs (9) der ersten Komponente (7) gefaltet ist.

7. Steuervorrichtung nach Anspruch 4, **dadurch gekennzeichnet, dass** die zweite Feder (16) mit Reibung an der gekrümmten Schulter (27) gleitet, wenn der Griff (2) gedreht wird, um die Drehzahl des Motors tatsächlich zu ändern.

8. Steuervorrichtung nach Anspruch 3, **dadurch gekennzeichnet, dass** das zweite Ende (21) der zweiten Feder (16) an einem ersten Ende (36) eines Metalldrahts (32) befestigt ist, der in den an der Lenkstange befestigten Körper (6) eingesetzt ist, wobei ein zweites Ende (37) des Metalldrahts (32) an einem solchen Körper (6) befestigt ist.

9. Steuervorrichtung nach Anspruch 8, **dadurch gekennzeichnet, dass** der Metalldraht (32) in einen Mantel (33) eingesetzt ist, der in einem entsprechenden Sitz (34) des an der Lenkstange befestigten Körpers (6) angeordnet ist, wobei der Draht (32) mit Reibung in dem Sitz (34) gleitet, wenn der Griff (2) gedreht wird, um die Drehzahl des Motors tatsächlich zu ändern.

10. Vorrichtung nach Anspruch 1, **dadurch gekennzeichnet, dass** die erste Feder (12) eine Druck-Torsionsfeder ist, die eine Vorspannung zwischen 0,12 und 0,8 Nm aufweist, wobei die zweite Feder (16) eine Zugfeder mit einer Vorspannung zwischen 0,1 und 1 N ist.

## Revendications

1. Dispositif de commande électronique du papillon pour une motocyclette à deux ou trois roues, une motocyclette à quatre roues, une motoneige ou un véhicule nautique personnel, le véhicule étant équipé d'un guidon sur lequel est montée une poignée (2) dudit dispositif de commande (1), sous l'action d'un conducteur, la poignée (2) pouvant tourner autour de son axe longitudinal (W) à partir d'une position de fin de course dans le but de modifier l'état de mouvement du véhicule, ladite rotation étant détectée par des moyens de détection (30) pouvant permettre de commander le papillon, c'est-à-dire de modifier le nombre de tours d'un moteur du véhicule en fonction de la rotation de la poignée (2), la poignée (2) étant associée à un corps (6) fixé au guidon et en rotation par rapport à celui-ci, étant prévue une première ressort (12) avec une précharge préétablie permettant la rotation de la poignée (2) sur un arc de rotation prédéterminé correspondant à une gamme de nombres de rotations possibles pour le moteur, dans lequel il existe un deuxième ressort (16) qui agit sur la poignée (2) au début de la rotation de celle-ci à partir de la position finale autour de l'axe longitudinal (W) dans le même sens de rotation, ledit deuxième ressort (16) ayant une précharge inférieure à celle du premier ressort (12) et agissant sur la poignée (2) avant la portée dudit premier ressort (12) sur la poignée, cette action du deuxième ressort (16) générant la perception, chez le conducteur, d'un jeu initial dans la rotation de la poignée (2) et ne provoquant pas d'augmentation du nombre de tours du moteur, ledit jeu correspondant à un jeu d'un dispositif mécanique de commande du papillon, **caractérisé en ce que** le premier et le deuxième ressort (12, 16) ramènent la poignée (2) à la même position de fin de course à la fin de la modification de l'état de mouvement du véhicule.

2. Dispositif de commande selon la revendication 1, **caractérisé en ce que** le deuxième ressort (16) permet une rotation angulaire de la poignée (2) à partir de la position de fin de course de 10°, de préférence comprise entre 0° et 4°.

3. Dispositif de commande selon la revendication 2, **caractérisé en ce que** le deuxième ressort (16) est un ressort de traction ayant une première extrémité (20) intégralement jointe à la poignée (2) et une deuxième extrémité (21) associée de manière fonctionnelle au corps (6) fixé au guidon.

4. Dispositif de commande selon la revendication 3, **caractérisé en ce que** ledit deuxième ressort (16) est disposé dans un siège (15) du corps (6) fixé au guidon, ledit siège (15) étant défini par un premier composant (7) de ce corps et par un épaulement courbe (27) présent sur ledit composant, la deuxième extrémité (21) de ce deuxième ressort (16) étant fixée audit corps (6) dans ce siège (15).

5. Dispositif de commande selon la revendication 4, **caractérisé en ce que** ladite poignée (2) dispose d'une extrémité (4) insérée dans un trou (9) dudit premier composant (7) du corps (6) fixé au guidon, ladite extrémité coopérant avec la première extrémité (20) du deuxième ressort (16).

6. Dispositif de commande selon les revendications 4 et 5, **caractérisé en ce que** ledit épaulement (27) fait saillie à partir d'une partie (7A) dudit premier composant (7) et qu'il présente une extrémité libre (27A) repliée vers l'orifice (9) dudit premier composant (7).

7. Dispositif de commande selon la revendication 4, **caractérisé en ce que** le deuxième ressort (16) glisse avec friction sur ledit épaulement courbe (27) lorsque la poignée (2) est mise en rotation pour modifier effectivement le nombre de tours du moteur.

8. Dispositif de commande selon la revendication 3, **caractérisé en ce que** ledit deuxième ressort (16) possède la deuxième extrémité (21) fixée à une première extrémité (36) d'un fil métallique (32) inséré dans le corps (6) fixé au guidon, une deuxième extrémité (37) dudit fil métallique (32) étant fixée à ce corps (6).

9. Dispositif de commande selon la revendication 8, **caractérisé en ce que** ledit fil métallique (32) est inséré dans une gaine (33) disposée dans un siège correspondant (34) dudit corps (6) fixé au guidon, ledit fil (32) glissant avec friction dans ledit siège (34) lorsque la poignée (2) est mise en rotation pour modifier effectivement le nombre de tours du moteur.

10. Dispositif selon la revendication 1, **caractérisé en ce que** ledit premier ressort (12) est un ressort de torsion à compression ayant une précharge comprise entre 0,12 et 0,8 nM, le deuxième ressort (16) étant un ressort de traction ayant une précharge comprise entre 0,1 et 1 N.
